# EUROPÄISCHE PATENTSCHRIFT

(11) **EP 1 144 078 B1**
(45) Veröffentlichungstag und Bekanntmachung des Hinweises auf die Patenterteilung: **23.04.2003**
(21) Anmeldenummer: 99931216.8
(22) Anmeldetag: 30.06.1999
(51) Int. Cl.: B01D 46/00

(54) **RUNDFILTERPATRONE**
ROUND FILTER CARTRIDGE
CARTOUCHE FILTRANTE RONDE

(30) Priorität: 04.07.1998 DE 19829989
(43) Veröffentlichungstag der Anmeldung: 17.10.2001
(73) Patentinhaber: FILTERWERK MANN & HUMMEL GmbH, 71631 Ludwigsburg (DE)
(72) Erfinder: LUKA, Helmut, 71672 Marbach (DE); SOMMER, Bruno, 71636 Ludwigsburg (DE)
(74) Vertreter: Voth, Gerhard, Dipl.-Ing.
(86) Internationale Anmeldenummer: EP9904500
(87) Internationale Veröffentlichungsnummer: WO00001464

(56) Entgegenhaltungen:
- EP-A- 0 673 280
- DE-A- 3 140 128
- DE-C- 4 419 360
- US-A- 5 547 480

## Beschreibung

### Stand der Technik

Die Erfindung betrifft eine Rundfilterpatrone nach der Gattung des Patentanspruchs 1. Außerdem betrifft die Erfindung ein Filter, in welchen die Rundfilterpatrone eingebaut ist.

Rundfilterpatronen sowie deren Gehäuse sind zum Beispiel aus der EP 0 673 280 bekannt. Diese besitzen an den Stirnseiten der Filterpatrone Endscheiben aus einem flexiblen Material, zum Beispiel PUR-Schaum. Dadurch wird die Herstellung kostengünstiger, metallfreier Filterpatronen möglich, indem das Filtermedium einfach in die Endscheiben eingegossen werden kann. Außerdem ermöglicht die Elastizität der Endscheiben eine Abdichtung der Filterpatrone gegen das Gehäuse. Dies wird insbesondere durch einen Dichtwulst erreicht, der auf einen Rohrstutzen im Gehäuseinneren geschoben werden kann. Dabei wird die Rundfilterpatrone gleichzeitig positioniert.

Zum Schutz einer Deformation der Filterpatrone aufgrund des sich zwischen Rohund Reinseite ergebenden Druckunterschiedes ist am reinseitigen Ausgang des Gehäuses ein Stützrohr fest angebracht. Auf dieses wird die Filterpatrone bei der Montage im Gehäuse aufgesteckt. Dieser Montageprozeß gestaltet sich jedoch umständlich, da zwischen Stützrohr und dem Inneren der Patrone nur ein schmaler Spalt vorgesehen ist. Um die Patrone beschädigungsfrei montieren zu können, muß daher ein Einbauraum in axialer Verlängerung des Filtergehäuses von der Länge der Filterpatrone vorgesehen werden. Dadurch werden die Anordnungsmöglichkeiten des Filtergehäuses eingeschränkt.

Weiterhin offenbart die DE 31 40 128 einen Ansaugluftfilter für Brennkraftmaschinen. Der Ansaugluftfilter verfügt über ein Filtergehäuse und einen austauschbaren Filtereinsatz. Der Filtereinsatz besteht aus einem ringförmig zusammengeschlossenen zick-zack-förmig gefalteten Filtermedium, einer Deckelscheibe und einer Bodenscheibe, wobei ein Stützrohr in den Filtereinsatz integriert ist. Die Enden des Stützrohres sind von den elastisch verformbaren Endscheiben umschlossen. Die Abdichtung des Filterelementes gegenüber dem Gehäuse erfolgt in dem Bereich der elastischen Endscheiben. Nachteilig bei dieser Ausführung ist, dass der Filtereinsatz axial zu seiner Einbaulage montiert werden muss. Hierzu ist Montageraum, welcher sich senkrecht über dem Ansaugluftfilter befindet, erforderlich. An schwer zugänglichen Stellen im Fahrzeug kann ein derartiger Filtereinsatz nicht montiert werden.

Weiterhin offenbart die US 5 547 480 einen Luftfilter. Dieser Luftfilter verfügt über einen Filtereinsatz, der in einem Gehäuse angeordnet ist. Der Filtereinsatz besteht aus einem gefalteten ringförmig zusammengeschlossenen Filtermedium. An den Stirnseiten des Filtermediums sind Endscheiben angeordnet, welche ein von dem Filtermedium umgebenes Stützrohr in den Endbereichen umschließen. Die Endscheiben bestehen aus einem elastisch verformbaren Material, wodurch der Filtereinsatz an dem Gehäuse abgedichtet wird. Nachteilig bei dieser Ausführung ist, dass die obere Endscheibe über einen kleineren Innendurchmesser verfügt als der Außenumfang des in den Filtereinsatz hineinragenden Stutzens. Die Montage des Filterelementes kann somit nur in axialer Richtung erfolgen, da ein Toleranzausgleich nicht möglich ist. Hierzu ist der erforderliche Montageraum vorzusehen, der sich senkrecht über dem Einbauort des Filtereinsatzes befindet.

Die Aufgabe der Erfindung besteht daher darin, eine kostengünstig herstellbare, metallfreie Filterpatrone zu schaffen, die einen einfachen Einbau in das zugehörige Filtergehäuse erlaubt und hierfür einen geringen Einbauraum benötigt, wobei die Möglichkeiten einer Beschädigung der Patrone beim Einbau minimiert werden sollen.

Diese Aufgabe wird durch die Merkmale des Patentanspruchs 1 gelöst. Ferner wird gemäß Patentanspruch 9 ein Filter, in welchen die Rundfilterpatrone eingebaut ist, beansprucht.

### Vorteile der Erfindung

Die erfindungsgemäße Rundfilterpatrone besteht aus einem hohlzylinderförmigen Filtermedium, welches an dessen Stirnseiten eine Bodenscheibe und eine Deckelscheibe aufweist. Zumindest die Deckelscheibe besteht aus einem elastischen Material und weist einen Auslaß für das gefilterte Medium auf. Im Inneren des Filtermediums ist ein, insbesondere aus Kunststoff gefertigtes Stützrohr angeordnet, welches zumindest mit der Deckelscheibe in Formschluß steht. Im Bereich dieser formschlüssigen Verbindung weist das Ende des Stützrohrs eine elastische Zone auf. Dadurch kann das Stützrohr die Deformation der elastischen Deckelscheibe mitmachen. Durch diese Maßnahme ist ein zuverlässiger Formschluß zwischen Stützrohr und Deckelscheibe immer gewährleistet. Wird die Rundfilterpatrone im Filtergehäuse montiert, ergibt sich am Anschlußelement des Filtergehäuses eine Deformation der Deckelscheibe der Rundfilterpatrone. Dadurch wird zum einen eine Fixierung der Rundfilterpatrone und zum anderen eine Dichtung gegenüber der Gehäusewand erzielt. Durch die elastische Zone am Stützrohr wird die notwendige Montagekraft für die Rundfilterpatrone verringert. Außerdem verringert sich die Gefahr eines Abscherens der Deckelscheibe von dem Rohrende während der Montage.

Durch die flexible Deckelscheibe sowie das in die Rundfilterpatrone integrierte Stützrohr kann beim Einbau der Filterpatrone von der rein axialen Einbaurichtung bezüglich der Mittelachse des Gehäuses abgewichen werden. Es ist zum Beispiel ein Einbau mit einer schräg gestellten Bewegungsrichtung der Filterpatrone bezüglich der Mittelachse des Gehäuses möglich. Dies verkleinert den Einbauraum, der vor dem Gehäusedeckel des Filtergehäuses vorgesehen werden muß, wodurch das Filtergehäuse flexibler bezüglich der Anordnung zum Beispiel in einem Motorraum wird.

Sofern das Stützrohr aus Kunststoff ist, kann die Rundfilterpatrone metallfrei hergestellt werden. Dadurch ergeben sich Vorteile durch eine unproblematische thermische Entsorgbarkeit dieses Bauteils.

Eine besondere Ausführungsform der Erfindung sieht zur Schaffung der elastischen Zone am Rohrende axial verlaufende Schlitze vor. Diese Schlitze sind konstruktiv einfach am Stützrohr vorzusehen. Das Stützrohr kann dann in einem Stück und aus einem Material gefertigt sein. Zur Unterstützung der elastischen Wirkung der durch die Schlitze entstehenden Zungen kann die Dicke der Zungen im Vergleich zu der Wandstärke des Stützrohrs verringert werden.

Es ist vorteilhaft, die Deckeischeibe aus PUR-Schaum herzustellen. Das Filtermedium kann dann in dieses Material eingegossen werden. Durch dieses Verfahren lassen sich insbesondere Luftfilterpatronen kostengünstig herstellen.

Eine andere Variante sieht als Material für die Deckelscheibe eine elastische Folie vor. Diese wird auf die Stirnseite des Filtermediums aufgebracht und anschließend erhitzt. Durch die Erhitzung härtet das Material aus und vergrößert gleichzeitig sein Volumen. Dadurch wird das Filtermedium und die elastische Zone des Stützrohrs im Ausdehnungsbereich der Deckelscheibe fixiert. Die Restelastizität der Deckelscheibe nach dem Aushärtungsprozeß genügt, um eine Dichtwirkung gegenüber entsprechenden Aufnahmemitteln im Filtergehäuse zu erzielen. Durch diese Ausbildung der Filterpatrone lassen sich insbesondere kostengünstige Ölfilter herstellen.

Es ist vorteilhaft, die Bodenscheibe der Rundfilterpatrone aus demselben Material zu fertigen wie die Deckeischeibe. Durch die Vereinheitlichung der Materialien läßt sich eine Optimierung des Fertigungsverfahrens für Filterpatronen erzielen.

Eine weitere Variante der Erfindung ergibt sich dadurch, daß an beiden Enden des Stützrohrs elastische Zonen vorgesehen sind. Dadurch entsteht eine Filterpatrone, die an beiden Stirnseiten offen ist und an beiden Seiten die Möglichkeit einer Abdichtung aufgrund der Elastizität der Endscheiben ermöglicht. Die zweite Öffnung der Rundfilterpatrone kann zum Beispiel zur Anbringung eines Umgehungsventils vorgesehen werden.

Besonders vorteilhaft ist es, die Abdichtung zwischen Auslaß in der Endscheibe der Rundfilterpatrone und Gehäuse radial vorzusehen. Dadurch kann ein axialer Versatz des Filterelementes ausgeglichen werden. Die Integration einer radialen Dichtfläche in den Endscheiben, insbesondere der Deckelscheibe ist insbesondere durch zwei Maßnahmen möglich. Zum einen kann die Dichtfläche aus der Lochwand bestehen, die sich aufgrund der Materialstärke der Deckelscheibe in dem den Auslaß bildenden Rundloch ergibt. Die Deckelscheibe kann dann vergleichbar mit einem Untermaß aufweisenden Ring auf einen Rohrstutzen im Gehäuseinneren zur Aufnahme der Rundfilterpatrone geschoben werden. Alternativ hierzu kann die Dichtfläche durch einen radialen Dichtwulst gebildet werden, der an die Stimseite der Deckelscheibe angegossen ist. Die Montage eines solchen Filterelements erfolgt in der gleichen Weise wie im Zusammenhang mit der ersten Variante beschrieben.

Für Rundfilterpatronen mit einem Auslaß sieht eine vorteilhafte Weiterbildung des Erfindungsgedankens die Integration eines Abschlusses in das Stützrohr vor. Wird das Stützrohr in der obengenannten Weise in die Bodenscheibe eingegossen, wird durch den Abschluß die Öffnung in der Mitte der Bodenscheibe verschlossen. Hierzu müssen die Ränder des Abschlusses zusammen mit dem Ende des Stützrohres in die Bodenscheibe eingegossen sein. Verglichen mit der Variante, die ganze geschlossene Bodenscheibe aus dem elastischen Scheibenmaterial zu fertigen, sind durch diese Variante höhere Druckunterschiede an der Filterpatrone realisierbar. Der Abschluß kann zur Steigerung seiner Druckstabilität bauchig ausgeführt sein.

Ein Filtergehäuse gemäß Anspruch 10 weist insbesondere Mittel zur Aufnahme einer Filterpatrone mit elastischen Endscheiben auf. Diese Mittel können durch ringförmige Absätze bzw. Rohrstutzen im Boden des Gehäusetopfes bzw. im Deckel gebildet sein. Durch Aufsetzen des Deckels wird die Rundfilterpatrone dadurch im Gehäuse fixiert.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Zwei Ausführungsbeispiele der Erfindung werden nachfolgend anhand der Zeichnung näher erläutert. Hierbei zeigen
- Figur 1: den Mittelschnitt durch ein Luftfiltergehäuse mit eingebauter Patrone, die eine Deckelscheibe aus PUR-Schaum mit angesetzter Dichtwulst, eine Bodenscheibe mit in das Stützrohr integriertem Abschluß aufweist und
- Figur 2: den Längsschnitt durch eine Ölfilterpatrone mit Stützrohr, welches beidseitig elastische Zonen aufweist, und Folienendscheiben und
- Figur 3: den Mittelschnitt durch einen Ölfilter, in dem eine Ölfilterpatrone nach dem Bauprinzip gemäß Figur 2 zum Einsatz kommt.

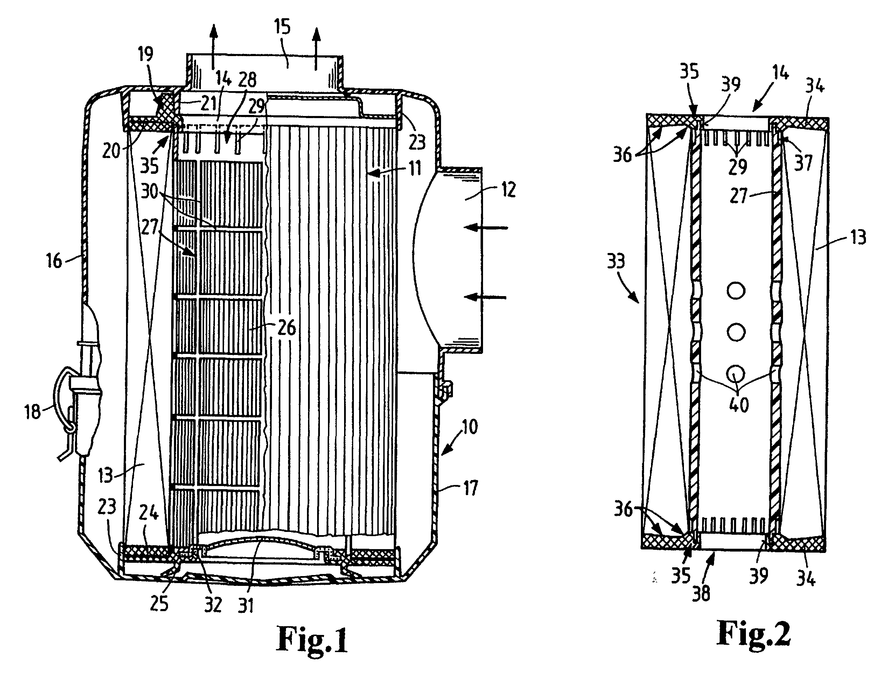

In Figur 1 ist ein Filtergehäuse 10 mit eingebauter Luftfilterpatrone 11 dargestellt. Die Luft tritt durch einen Rohlufteinlaß 12 in das Filtergehäuse ein, durchtritt ein Filtermedium 13 der Filterpatronen von außen nach innen, strömt zu einem Auslaß 14 und verläßt das Filtergehäuse durch einen Rohluftauslaß 15, der mit dem Auslaß 14 in Verbindung steht.

Das Filtergehäuse 10 besteht aus einem Gehäusetopf 16 und einem Deckel 17, die durch Spannelemente als Verschlußmittel 18 zusammengehalten werden. Zur Montage der Luftfilterpatrone wird der Gehäusedeckel abgenommen und die Filterpatrone mit einem Dichtwulst 19, welcher Teil einer Deckelscheibe 20 der Filterpatrone ist, auf einen Rohrstutzen 21 aufgeschoben. Innerhalb des Rohrstutzens in der Bodenfläche des Gehäusetopfes 16 ist der Reinluftauslaß 15 angeordnet. Der Dichtwulst 19 wird durch Aufschieben auf den Rohrstutzen 21 aufgeweitet, so daß eine dichtende Verbindung zwischen diesen Bauelementen besteht. Der Auslaß 14 der Filterpatrone und der Reinluftauslaß 15 des Gehäuses sind somit dichtend von dem restlichen Volumen des Filtergehäuses getrennt.

Im Deckel 17 sowie im Gehäusetopf 16 sind außerdem Zentrierstutzen 23 angebracht, die an den Außenseiten der Deckelscheibe 20 sowie einer Bodenscheibe 24 der Luftfilterpatrone zur Wirkung kommen. Die Zentrierstutzen dienen nicht allein der Zentrierung des Elementes sondem auch der Abstützung bei schwingender Beanspruchung des Filtergehäuses. Durch Aufsetzen des Deckels 17 wird die Luftfilterpatrone 11 in der montierten Stellung fixiert. Durch elastische Nasen 25, die sich im Deckel 17 abstützen und an die Bodenscheibe 24 angespritzt sind, wird die Luftfilterpatrone fest auf den Rohrstutzen 21 gedrückt.

Die Luftfilterpatrone besteht aus dem Filtermedium 13, insbesondere einem zickzackförmig gefaltetem Filterpapier, welches zu einem zylindrischen Mantel der Luftfilterpatrone ringförmig zusammengeschlossen ist. Die Stirnseiten des Filtermediums sind in die Bodenscheibe 24 und die Deckelscheibe 20 eingegossen. im zylindrischen Innenraum 26 der Luftfilterpatrone befindet sich ein Stützrohr 27. Das auslaßseitige Ende des Stützrohrs weist eine elastische Zone 28 auf, die durch axiale Schlitze 29 im Rohrende gebildet wird. Durch die elastische Zone ist das Ende des Stützrohrs 27 in radialer Richtung elastisch. Da es in die Deckelscheibe 20 mit eingegossen ist, weitet es sich mit dieser zusammen bei der Montage der Luftfilterpatrone 11 auf dem Rohrstutzen 21 auf, so daß eine formschlüssige Verbindung 35 zwischen Stützrohr und Deckelscheibe erhalten bleibt.

Das Stützrohr besteht aus einem zylindrischen Gitter 30, welches den Luftfluß nur unwesentlich stört und dabei eine genügende radiale Abstützung des Filtermediums 13 zum Innenraum 26 der Filterpatrone hin gewährleistet. An dem dem Auslaß 14 abgewandten Ende des Stützrohres ist ein deckelförmiger Abschluß 31 angespritzt. Der Abschluß weist eine konvexe Gestalt auf, um dem zwischen dem Innenraum 26 und dem Gehäuseinneren herrschenden Druckunterschied standhalten zu können. Das untere Rohrende sowie ein Rand 32 des Abschlusses 31 sind in die Bodenscheibe 24 mit eingegossen. Dadurch kommt die Abdichtung in diesem Bereich zustande.

In Figur 2 ist eine Ölfilterpatrone 33 dargestellt. Diese besteht aus dem Filtermedium 13, dem Stützrohr 27, welches Bohrungen 40 zum Durchlaß des Öls aufweist, und zwei Folienendscheiben 34, die die Aufgaben der Deckelscheibe bzw. der Bodenscheibe übernehmen. Die Verbindung 35 zwischen Stützrohr 27 und Folienendscheiben 34 sowie eine Abdichtung des Filtermediums zu den Folienendscheiben kommt durch die Ausbildung einer Ausdehnungszone 36 der Folienendscheiben während des Aushärtungsprozesses zustande.

Das Stützrohr 27 weist an beiden Enden elastische Zonen auf. Diese werden gebildet durch axiale Schlitze 29 sowie einen Sprung 37 in der Wandstärke des Stützrohrs im Bereich der Schlitze 29. Durch den symmetrischen Aufbau des Stützrohrs 27 hat die Ölfilterpatrone neben dem Auslaß 14 einen zweiten Auslaß 38.

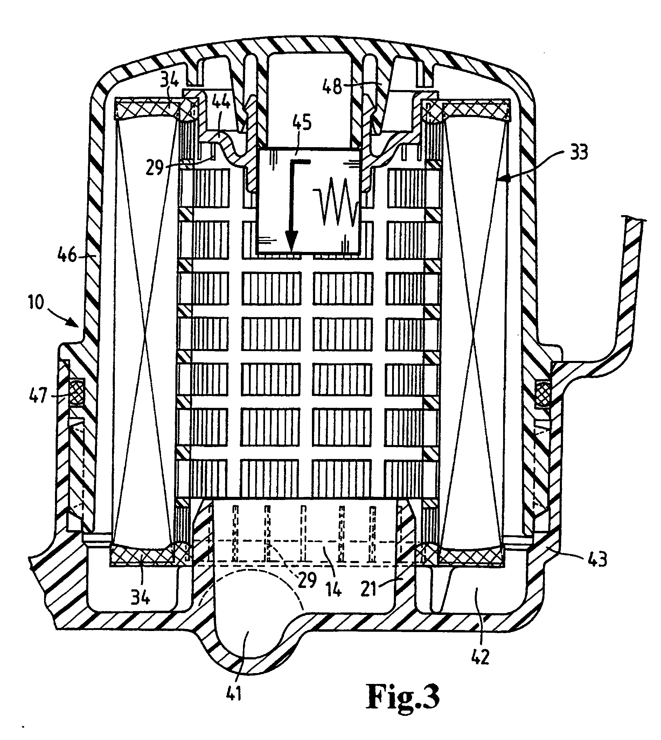

Ein Ölfilter gemäß Figur 3 besteht aus dem Gehäuse 10, in das die Ölfilterpatrone 33 eingesetzt ist. Mit der einen Seite wird sie auf den Rohrstutzen 21 aufgeschoben, der mit einem Ölauslaß 41 verbunden ist. Ein Öleinlaß 42 ist in einen Gehäusesockel 43 integriert. Die Folienendscheibe 34, die mit dem Rohrstutzen 21 in Verbindung steht, bildet den Auslaß 14. In die andere Endscheibe 34 ist ein Ventilträger 44 mit einem Umgehungsventil 45 eingesetzt. Das Umgehungsventil ist schematisch dargestellt. Bei der Montage der Ölfilterpatrone 33 auf dem Rohrstutzen 21 sowie bei dem Einsetzen des Ventilträgers 44 weiten sich die Folienendscheiben 34 radial auf. Die hierzu nötige Elastizität des Mittelrohrs wird durch die Schlitze 29 ermöglicht.

Der prinzipielle Aufbau des Ölfilters entspricht dem Aufbau des Luftfilters gemäß Figur 1. Das Gehäuse 10 weist einen Schraubdeckel 46 auf, welcher mit Hilfe eines O-Rings 47 mit dem Gehäusesockel 43 abgedichtet wird. Im Schraubdeckel 46 ist weiterhin eine Klemmaufnahme 48 für den Ventilträger 44 vorgesehen.

## Patentansprüche

1. Rundfilterpatrone, bestehend aus einem ringförmig zu einem Hohlzylinder zusammengefassten Filtermedium (13), einer Bodenscheibe (24) und einer verformbaren Deckelscheibe (20), wobei diese einen Auslass (14) für das gefilterte Medium aufweist und wobei ein Stützrohr (27) in die Rundfilterpatrone integriert ist, welches mit der Deckelscheibe (20) in Formschluss steht, **dadurch gekennzeichnet, dass** das Rohrende des Stützrohres (27) eine radial elastische Zone (28) aufweist, welche im Bereich der formschlüssigen Verbindung (35) mit der Deckelscheibe (20) kommuniziert, wobei die elastische Zone (28) durch axial verlaufende Schlitze (29) im Rohrende gebildet ist.

2. Rundfilterpatrone nach einem der vorherigen Ansprüche, **dadurch gekennzeichnet, dass** die Deckelscheibe (20) aus einem elastischen Material, insbesondere PUR-Schaum, besteht, in welches das Filtermedium (13) und die elastische Zone (28) des Stützrohres (27) eingegossen sind.

3. Rundfilterpatrone nach einem der vorherigen Ansprüche, **dadurch gekennzeichnet, dass** die Deckelscheibe (20) durch eine ausgehärtete elastische Masse mit Restelastizität besteht, wobei das Filtermedium (13) und die elastische Zone (28) des Stützrohres in einer Ausdehnungszone (36) der Deckelscheibe (20) fixiert sind.

4. Rundfilterpatrone nach einem der vorherigen Ansprüche, **dadurch gekennzeichnet, dass** die Bodenscheibe (24) und die Deckelscheibe (20) aus demselben Material bestehen.

5. Rundfilterpatrone nach einem der vorherigen Ansprüche, **dadurch gekennzeichnet, dass** je eine elastische Zone (28) an den beiden Enden des Stützrohres (27) vorgesehen sind, wodurch die Rundfilterpatrone einen zweiten Auslass (38) aufweist.

6. Rundfilterpatrone nach einem der vorherigen Ansprüche, **dadurch gekennzeichnet, dass** der Auslass (14), (38) aus einem Rundloch in der Deckelscheibe (20) besteht, wobei die Lochwände als Dichtfläche (39) ausgeführt sind.

7. Rundfilterpatrone nach einem der vorherigen Ansprüche, **dadurch gekennzeichnet, dass** der Auslass (14) einen radialen Dichtwulst (19) aufweist.

8. Rundfilterpatrone nach einem der vorherigen Ansprüche, **dadurch gekennzeichnet, dass** in das Stützrohr (27) ein Abschluss (31) integriert ist, der dichtend mit der Bodenscheibe (24) verbunden ist und einen Innenraum (26) der Rundfilterpatrone in auf der Seite der Bodenplatte verschließt.

9. Filter mit einem Filtergehäuse mit folgenden Merkmalen:
- das Filtergehäuse (10) weist einen Gehäusetopf (16) und einen Deckel (17) auf,
- für die Verschlussmittel (18) vorgesehen sind,
- der Gehäusetopf besitzt einen Rohlufteinlass (12) und einen Reinluftauslass (15),
- der Reinluftauslass (15) weist einen in das Gehäuseinnere ragenden Rohrstutzen (21) auf,
- die Deckelscheibe (20) der Rundfilterpatrone stützt sich dichtend am Rohrstutzen (21) ab und
- die Bodenscheibe (24) der Rundfilterpatrone stützt sich im Deckel (17) ab, **dadurch gekennzeichnet, dass** in den Filter eine Rundfilterpatrone nach einem der vorhergehenden Ansprüche eingebaut ist.

## Claims

1. A round filter cartridge constituted by an annular filter medium (13), assembled in a hollow cylinder, a bottom disc (24) and a deformable lid disc (20), whereby the said lid disc presents an outlet (14) for the filtered medium and whereby a supporting tube (27) is integrated in the round filter cartridge; the said supporting tube being fit in a form-locked manner with the lid disc (20), **characterised in that** the tube end of the supporting tube (27) presents a radial resilient area (28) which communicates in the area of the form-locked link (35) with the lid disc (20); whereby the resilient area (28) is formed by axially extending slots (29) in the tube end .

2. A round filter cartridge according to one of the preceding claims, **characterised in that** the lid disc (20) is constituted by a resilient material, especially PUR foam in which the filter medium (13) and the resilient area (28) of the supporting tube (27) are moulded.

3. A round filter cartridge according to one of the preceding claims, **characterised in that** the lid disc (20) is formed in a hardened resilient mass with residual elasticity , whereby the filter medium (13) and the resilient area (28) of the supporting tube are attached in an extension area (36) of the lid disc (20).

4. A round filter cartridge according to one of the preceding claims, **characterised in that** the bottom disc (24) and the lid disc (20) are formed with the same material.

5. A round filter cartridge according to one of the preceding claims, **characterised in that** a resilient area (28) is provided at both ends of the supporting tube (27); whereby the round filter cartridge presents a second outlet (38).

6. A round filter cartridge according to one of the preceding claims, **characterised in that** the outlet (14), (38) is constituted by a round hole in the lid disc (20); whereby the hole walls are designated to form a sealing surface (39).

7. A round filter cartridge according to one of the preceding claims, **characterised in that** the outlet (14) presents a radial sealing bead (19).

8. A round filter cartridge according to one of the preceding claims, **characterised in that** a closing is integrated in the supporting tube (27) which is connected with the bottom disc (24) and closes an internal chamber (26) of the round filter cartridge on the side of the bottom plate.

9. A filter with a filter housing with the following features:
- the filter housing (10) presents a housing pot (16) and a lid (17),
- on which closing means (18 ) are provided ,
- the housing pot comprises a raw air intake (12) and a clean air outlet (15),
- the clean air outlet (15) presents a pipe socket (21) protruding into the interior of the housing,
- the lid disc (20) of the round filter cartridge leans in a sealing manner on the pipe socket (21) and
- the bottom disc (24) of the round filter cartridge leans in the lid, **characterised in that** a round filter cartridge is installed in the filters according to one of the preceding claims.

## Revendications

1. Cartouche à filtre ronde constituée d'un moyen de filtrage (13) rassemblée dans un cylindre creux annulaire, d'un disque de fond (24) et d'un disque de couvercle (20) déformable ; lequel présente une sortie (14) pour le moyen filtré et où un tube d'appui (27) est intégré dans la cartouche à filtre ronde ; lequel tube d'appui est en coopération de forme avec le disque de couvercle (20) ; **caractérisé en ce que** l'extrémité du tube d'appui (27) présente une zone radiale élastique qui communique avec le disque de couvercle (20) dans la zone de la liaison à coopération de forme (35) ; la zone élastique (28) étant formées par des fentes (29) s'étendant de manière axiale dans l'extrémité du tube.

2. Cartouche à filtre ronde selon une des revendications précédentes, **caractérisée en ce que** le disque de couvercle (20) est formée dans un matériau élastique notamment de la mousse PUR dans lequel le moyen de filtrage (13) et la zone élastique (28) du tube d'appui (27) sont moulés.

3. Cartouche à filtre ronde selon une des revendications précédentes , **caractérisée en ce que** le disque de couvercle (20) est constitué d'une masse durcie avec une élasticité résiduelle ; le moyen de filtrage (13) et la zone élastique (28) du tube d'appui étant fixés dans une zone d'extension (36) du disque de couvercle (20).

4. Cartouche à filtre ronde selon une des revendications précédentes, **caractérisée en ce que** le disque de fond (24) et le disque de couvercle sont constitués dans le même matériau.

5. Cartouche à filtre ronde selon une des revendications précédentes , **caractérisée en ce qu'**il est prévu une zone élastique (28) sur les deux extrémités du tube d'appui (27) ; ce qui permet à la cartouche à filtre ronde d'avoir une deuxième sortie (38).

6. Cartouche à filtre ronde selon une des revendications précédentes , **caractérisée en ce que** la sortie (14), (38) est composée d'un trou rond dans le disque de couvercle (20) ; les parois du trou étant réalisées en tant que surfaces étanches (39).

7. Cartouche à filtre ronde selon une des revendications précédentes, **caractérisée en ce que** la sortie (14) présente un bourrelet d'étanchéité (19) radial.

8. Cartouche à filtre ronde selon une des revendications précédentes, **caractérisée en ce qu'**une fermeture (31) est intégrée dans le tube d'appui (27) qui est reliée de manière étanche avec le disque de fond (24) et ferme une chambre interne (26) de la cartouche à filtre ronde du coté de la plaque de fond.

9. Filtre avec un boîtier de filtre avec les caractéristiques suivantes :
- le boîtier de filtre (10) présente un pot de filtre (16) et un couvercle (17),
- pour lesquels on a prévu des moyens de fermeture (18),
- le pot de filtre possède une entrée d'air brute (12) et une sortie d'air propre (15),
- la sortie d'air propre (15) présente un raccord de tube (21) faisant saillie à l'intérieur du boîtier,
- le disque de couvercle et la cartouche à filtre ronde s'appuie de manière étanche sur le raccord de tube et
- le disque de fond (24) de la cartouche à filtre ronde s'appuie sur le couvercle (17), **caractérisé en ce qu'**une cartouche à filtre ronde selon une des revendications précédentes est installée dans le filtre.
